# EUROPÄISCHE PATENTSCHRIFT

(11) **EP 1 175 960 B1**
(45) Veröffentlichungstag und Bekanntmachung des Hinweises auf die Patenterteilung: **29.12.2004**
(21) Anmeldenummer: 01810729.2
(22) Anmeldetag: 23.07.2001
(51) Int. Cl.: B23Q 17/22, B24B 41/04

(54) **Verfahren und Vorrichtung zum Ausrichten einer Werkstückachse in Bezug auf eine Werkzeugachse an einer Werkzeugmaschine**
Method and device for aligning a workpiece axis with a tool axis in a machine tool
Procédé et dispositif pour aligner l'axe d'une pièce avec l'axe d'un outil dans une machine-outil

(30) Priorität: 24.07.2000 CH 20001459
(43) Veröffentlichungstag der Anmeldung: 30.01.2002
(73) Patentinhaber: Fritz Studer AG, CH-3612 Steffisburg (CH)
(72) Erfinder: MUEHLEMATTER, Ulrich, 3705 Faulensee (CH)
(74) Vertreter: AMMANN PATENTANWAELTE AG BERN

(56) Entgegenhaltungen:
- EP-A- 0 761 388
- CH-A- 653 590
- DE-A- 3 524 438
- PATENT ABSTRACTS OF JAPAN vol. 012, no. 466 (M-772), 7. Dezember 1988 (1988-12-07) & JP 63 191559 A (MAZDA MOTOR CORP), 9. August 1988 (1988-08-09)
- PATENT ABSTRACTS OF JAPAN vol. 018, no. 190 (M-1586), 31. März 1994 (1994-03-31) & JP 06 000705 A (TSUGAMI CORP), 11. Januar 1994 (1994-01-11)

## Beschreibung

Die vorliegende Erfindung bezieht sich auf ein Verfahren und eine Vorrichtung zum Ausrichten einer Werkstückachse in Bezug auf eine Werkzeugachse an einer Werkzeugmaschine und ist insbesondere als Achskorrektur-Einrichtung bei Innenrundschleifmaschinen gedacht. Beim Rundschleifen von Teilen im Spannfutter, insbesondere bei Innenrundschleifmaschinen, müssen zur genauen Positionierung von Werkstück und Werkzeug für ein Erreichen der heute erforderlichen Teilegenauigkeiten, insbesondere für die Zylindrizität, die Werkstückachsen zu den Rotationsachsen der Werkzeuge sehr genau aufeinander ausgerichtet werden können. Parallel zu diesen Achsen liegt mindestens eine translatorische Hauptachse der Maschine, eine Vorschubachse Z, welche die Basis für das Ausrichten darstellt.

Aus der DE-A-34 30 557 ist eine Werkzeugmaschine zur spanabhebenden Bearbeitung von Werkstücken, insbesondere Innenschleifmaschine bekannt, bei der zur Messung der Ausbiegung der Werkzeugspindel die auf das Werkzeug wirkende Normalkraft benutzt wird und dazu ein Kraftaufnehmer in die Antriebsachse des Zustellschlittens eingesetzt wird. Die Ausrichtung der Achsen jedoch erfolgt durch Verstellen der Spindel.

Achskorrektureinrichtungen für Rundschleifmaschinen gemäss dem Stand der Technik bestehen aus Systemen, bei denen Messeinrichtungen mit Stellgliedern über eine Steuerung gekoppelt sind. Mit diesen Einrichtungen werden durch Krafteinwirkung entweder die Bearbeitungsachsen relativ zu den Werkstückachsen oder umgekehrt die Werkstückachsen relativ zu den Bearbeitungsachsen um kleine Winkel oder kleine Wege räumlich verschoben. Die verschiedenen Systemkomponenten müssen im Hinblick auf kleine Bearbeitungszeiten sehr rasch und im Hinblick auf die Teilegenauigkeiten mit grösster Steifigkeit arbeiten. Insbesondere in schnell arbeitenden Bearbeitungssystemen mit mehreren Arbeitsstationen, die als Transfersysteme ausgebildet sind, ist eine zeitlich taktsynchrone Korrektur der Rundachsen für jede Bearbeitungsstation unerlässlich.

Mit Systemen des Standes der Technik können kleinste Zustellungen nicht genügend schnell und genügend genau realisiert werden. Ausserdem ist beim Betrieb eines Rundtisches eine einfache Zuführung des Signals wichtig. Dabei ist die Verwendung eines analogen Signals einfacher als die Verwendung von Wechselspannung.

Aus der EP-A-0 761 388 ist eine Schleifmaschine bekannt, bei der wenigstens ein Lager der Schleifspindel mittels einem Piezo-Aktor verschiebbar ist, wobei die Umkehrung des piezoelektrischen Effektes angewandt wird.

Aus der CH-A5-653 590, die den nächstkommenden Stand der Technik beschreibt, ist ein Dämpfungs- und Auslenkregelungssystem für Innenschleifaggregate bekannt, welches bei der Innenschleifbearbeitung von Bohrungen die Durchbiegung der Schleifspindel und des Schleifdorns durch ein Sensorelement misst und diese mittels piezoelektrischer Kraftelemente korrigiert.

Aus der DE-A1-35 24 438 ist zur Zylinderfehlerkompensation an einer Schleifmaschine eine Einrichtung mit zwei Stellgliedern bekannt, die auf dasselbe zu verstellende Schleifmaschinenteil wirken und die zur Korrektur der Achslage von Schleifspindelachse und Werkstückachse betätigbar sind, so dass sowohl eine parallele Achsverschiebung als auch eine Verschwenkung möglich ist.

Es ist von diesem Stand der Technik ausgehend Aufgabe der vorliegenden Erfindung, ein Verfahren und eine Vorrichtung zum Ausrichten einer Werkstückachse in Bezug auf eine Bearbeitungsachse eines Werkzeugs, oder umgekehrt, an einer Werkzeugmaschine anzugeben, die die erforderliche Starrheit aufweist sowie mit hoher Geschwindigkeit und höchster Auflösungsgenauigkeit arbeitet und kompakt ausgeführt ist. Diese Aufgabe wird mit dem Verfahren und der Vorrichtung der Ansprüche 1 und 4 gelöst.

Die Erfindung wird im folgenden anhand von Zeichnungen von Ausführungsbeispielen näher erläutert.
- Figur 1: zeigt schematisch eine Achskorrektureinrichtung für einen Werkstückhalter, und
- Figur 2: zeigt schematisch eine Achskorrektureinrichtung für einen Werkzeughalter.

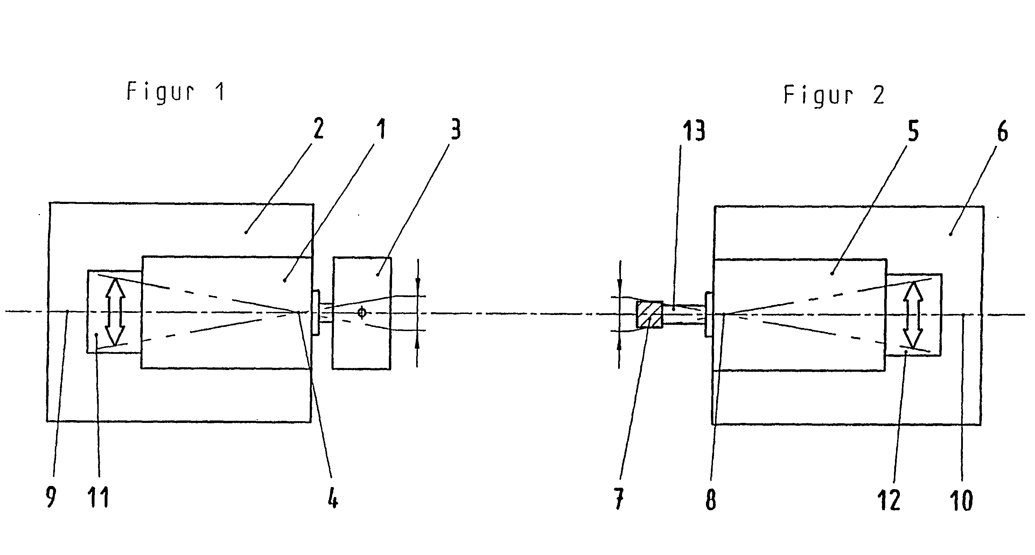

Figur 1 zeigt schematisch einen Werkstückspindelstock 1, der auf einem Maschinenbett 2 einer Rundschleifeinheit montiert ist. Der Werkstückspindelstock 1 weist einen Werkstückhalter 3 auf. Aus Figur 1 ist ferner ersichtlich, dass der Werkstückspindelstock 1 um eine Achse 4 drehbar angeordnet ist.

Figur 2 zeigt eine Schleifspindel 5, die in an sich bekannter Weise auf einem Kreuzschlitten 6 einer Rundschleifeinheit montiert ist und einen Werkzeughalter 13 mit einer Schleifscheibe 7 aufweist. In vorliegendem Ausführungsbeispiel ist die Schleifspindel um eine Achse 8 drehbar.

Zum genauen Ausrichten der Werkstückachse, bzw. der Werkstückhalterachse 9 in Bezug auf die jeweilige Bearbeitungsachse des Schleifwerkzeuges - beispielsweise nach Verstellen der Schleifspindel 5 mit Schleifscheibe 7 in Bezug auf die Werkstückachse 9 - auf die Werkzeugachse 10 der Schleifscheibe, bzw. der Achse 9 des Werkstückhalters 3, wird in den vorliegenden Ausführungsbeispielen ein piezoelektrischer Wandler 11, bzw. 12, auch Aktuator genannt, verwendet. Dabei wird vorausgesetzt, dass sowohl das Werkstück in Bezug auf den Werkstückhalter als auch die Werkzeugachse der Schleifscheibe in Bezug auf den Werkzeughalter, bzw. Schleifspindel ausgerichtet sind. Dies gilt auch analog für das Ausrichten der Achse einer Abrichteinrichtung in Bezug auf die Werkzeugachse.

Die Erfindung ist nicht auf den piezoelektrischen Wandler beschränkt. Als Wandler kann jede Einrichtung verwendet werden, die eine Krafteinwirkung in ein elektrisches Signal umwandelt und umgekehrt ein elektrisches Signal in eine Kraft, bzw. in einen Weg umwandelt. Ausser piozoelektrische Quarze können sich auch andere Quarze als geeignet erweisen sowie elektrische Spulen, die ein elektrisches Signal in eine Kraft, bzw. Weg umwandeln und umgekehrt.

In den vorliegenden Ausführungsbeispielen werden piezoelektrische Aktuatoren verwendet, hernach kurz Aktuatoren genannt. Die Aktuatoren sind mit einer nicht dargestellten Auswerteeinheit verbunden, um je nach Aufgabe und Ausgestaltung deren Messergebnisse bezüglich der Lage des Werkstücks, bzw. Werkstückhalterachse 9 in Bezug auf die Bearbeitungsachse, bzw. Werkzeugachse 10 zu kommunizieren und/oder die Aktuatoren die Korrekturbewegungen auf Grund von Messungen an den Werkstücken, z.B. Postprozess-Messungen bekannter Zusammenhänge zwischen Kraft und Verbiegung oder auf Grund bekannter, systematischer Fehler direkt ausführen zu lassen, um eine genaue Einstellung mit minimaler Abweichung zu erreichen.

Bei der Kompensation der Durchbiegung der Werkstücke, z.B. der Dorndurchbiegungskompensation, kann zum Messen und zum Stellen der gleiche Aktuator verwendet werden, wodurch eine sehr schnelle und genaue Korrektur der Achsen vorgenommen werden kann und eine sehr kompakte Bauweise erzielt wird. Analog kann auch die elastische Verformung der Werkstückhalterung und des Werkstücks kompensiert werden. Die Auswerteeinheit des Aktuators beim Werkzeughalter misst die Krafteinwirkung auf das Werkzeug und gibt dem Aktuator die notwendigen Impulse, um die Abweichung zu kompensieren.

Die Rundschleifeinheit kann neben dem Abrichtwerkzeug mit verschiedenen Schleifspindeln bestückt sein, z.B. mit einer oder mehreren Aussenschleifspindel(n) mit Werkzeughalter und Schleifscheibe und mit einer oder mehreren Innenschleifspindel(n) mit Werkzeughalter, wobei diese Schleifspindeln mit ihren Werkzeughaltern auf an sich bekannten Kreuzschlitten angeordnet sein können.

Theoretisch und idealerweise müsste der Drehpunkt 4, bzw. 8 des Werkstückspindelstocks oder der Schleifspindel im Werkstück, bzw. im Schleifwerkzeug liegen, doch ist dies in der Regel baulich nicht durchführbar. Die Abweichung von den Idealwerten beeinträchtigt jedoch nicht die gewünschte hohe Genauigkeit der Ausrichtung, da sie durch die Maschinensteuerung berücksichtigt werden kann.

In den vorliegenden Ausführungsbeispielen erfolgt die Korrektur rotativ, doch ist es auch möglich, sie linear translatorisch vorzunehmen, wobei die Werkstückhalterung und/oder die Halterung für die Abrichteinrichtung und/oder die Werkzeughalterung je in einem linear verschiebbaren System angeordnet sind, auf das der Aktuator wirkt.

Bei der bevorzugten Ausführungsform mit rotativer Korrektur ist nur eine sehr geringe Kraft erforderlich, um die Werkstückspindel oder Schleifspindel geringfügig zu drehen, sodass diese Korrektur sehr schnell und sehr genau erfolgen kann. Die Ausbildung des Messgliedes als Stellglied und die unmittelbare Einwirkung auf den Halter ergibt eine äusserst starre Verbindung der Korrektureinrichtung mit der zu korrigierenden Einheit, d.h. Werkzeughalter oder Werkstückhalter.

Es liegt auch im Rahmen der Erfindung, die verschiedenen Korrekturmöglichkeiten zu kombinieren, d.h. an allen drei Haltern Aktuatoren vorzusehen und/oder rotative und lineare Korrekturen zu kombinieren. So kann auch die Einstellung mittels Aktuatoren bei der Einrichtung zum Abrichten von Schleifscheiben verwendet werden.

Die beschriebene Korrektureinrichtung eignet sich zum Ausrichten einer Werkstückhalterachse auf eine Werkzeugachse von beliebigen Werkzeugmaschinen, jedoch insbesondere für Rundschleifmaschinen und dort ganz speziell für Innenrundschleifmaschinen, bei denen eine Korrektur gemäss Stand der Technik äusserst aufwendig ist und die nötige Präzision mangeln lässt.

Besondere Vorteile bietet die erfindungsgemässe Vorrichtung bei Bearbeitungsanlagen mit mindestens zwei Arbeitsstationen oder mit mehreren Werkstückhaltern und Abrichteinrichtung und einer oder mehreren Bearbeitungsstationen. Falls die Bearbeitungsanlage eine Transfereinrichtung aufweist, die z. B. als Rundtaktmaschine ausgebildet ist und Einrichtungen für die Hartfeinbearbeitung wie Feinstdrehen und dergl. enthält, werden an Präzision, genaue und kurze Arbeits- und Ausrichtzeit sowie Kompaktheit besonders hohe Anforderungen gestellt, für die die vorliegende, erfindungsgemässe Vorrichtung besonders geeignet ist.

Die Verwendung von Wandlern, z.B. von piezoelektrischen Aktuatoren, bietet eine Anzahl Vorteile, wobei vor allem ihre Schnelligkeit und Kompaktheit ausgenutzt werden:
a) für die Zylinderkorrektur bei
   a1) mehreren Werkstückspindelstöcken an einer Bearbeitungsstation,
   a2) mehreren Bearbeitungsstationen pro Werkstückspindelstock,
   ausgehend von Messungen an Werkstücken, vor- oder postprozess, Kraftmessungen, Temperaturmessungen und Erfahrungswerten,
b) bei der Dorndurchbiegungskompensation, ausgehend von Erfahrungswerten oder Krafmessungen, Körperschall und Wirkleistung,
c) mit Aktuatoren mit integrierter Kraftmessung für die aktive Versteifung der Maschine, d.h. für die Regelung der relativen Position von Werkstücken und Werkzeug. Mittels einem Verstärkungsfaktor lässt sich die Elastizität zwischen dem Bearbeitungspunkt = Kontaktstelle Werkstück-Werkzeug und dem Standort der Kraftmessung kompensieren, z.B. bei der Dorndurchbiegungskompensation.
d) Synergie bei Nutzung mehrerer Aktuatoren in einer Maschine und gleichzeitigem Messen und Bewegen in einem Gehäuse.

## Patentansprüche

1. Verfahren zum Ausrichten einer Werkstückachse (9) oder Abrichtwerkzeugachse in Bezug auf eine Werkzeugachse (10) eines Werkzeugs an einer Werkzeugmaschine, insbesondere Rundschleifmaschine, **dadurch gekennzeichnet, dass** die Lage mindestens einer der Achsen (9 oder 10) mittels eines Wandlers (11, 12) eingestellt wird, wobei der Wandler mit einer Auswerteeinheit verbunden ist, und sowohl zum Messen als auch zum Ausrichten verwendet wird.

2. Verfahren nach Anspruch 1, **dadurch gekennzeichnet, dass** die Einwirkung des Wandlers auf mindestens eine Achse rotativ erfolgt, wobei der Werkstückhalter (3) oder Abrichtwerkzeughalter um eine Achse (4) drehbar ist und/oder der Werkzeughalter (13) um eine Achse (8) drehbar ist und das Werkstück, das Abrichtwerkzeug und das Werkzeug in einer bestimmten Lage in ihren Haltern befestigt sind.

3. Verfahren nach Anspruch 1 oder 2, **dadurch gekennzeichnet, dass** die Einwirkung des Wandlers (11, 12) auf mindestens eine Achse linear translatorisch erfolgt, wobei der Werkstückhalter (3) oder Abrichtwerkzeughalter längsverschieblich angeordnet ist und/oder der Werkzeughalter (13) längsverschieblich angeordnet ist und das Werkstück, das Abrichtwerkzeug und das Werkzeug in einer bestimmten Lage in ihren Haltern befestigt sind.

4. Vorrichtung zur Durchführung des Verfahrens nach einem der vorhergenden Ansprüche zum Ausrichten einer Werkstückachse (9) oder Abricht-Werkzeugachse in Bezug auf eine Werkzeugachse (10) eines Werkzeugs (7) an einer Werkzeugmaschine, insbesondere Rundschleifmaschine, **dadurch gekennzeichnet, dass** sie mindestens einen Wandler (11, 12) enthält, der in Wirkverbindung mit dem Werkstückhalter (3) oder Abricht-Werkzeughalter und/oder mit dem Werkzeughalter (13) steht, und dass der Wandler sowohl zum Messen als auch zum Ausrichten dient.

5. Vorrichtung nach Anspruch 4, **dadurch gekennzeichnet, dass** der Werkstückhalter (3) oder Abricht-Werkzeughalter drehbar gelagert ist, wobei die Maschinensteuerung ausgebildet ist, einen allfälligen Abstand des Drehpunktes zum Werkstück zu berücksichtigen.

6. Vorrichtung nach Anspruch 4, **dadurch gekennzeichnet, dass** der Werkstückhalter (3) auf einem um eine Achse (4) drehbaren Werkstückspindelstock (1) befestigt ist.

7. Vorrichtung nach Anspruch 4, **dadurch gekennzeichnet, dass** der Werkzeughalter (13) drehbar gelagert ist, wobei die Maschinensteuerung ausgebildet ist, einen allfälligen Abstand des Drehpunktes zum Werkzeug (7) zu berücksichtigen.

8. Vorrichtung nach Anspruch 7, **dadurch gekennzeichnet, dass** der Werkzeughalter (13) auf einer um eine Achse (8) drehbaren Schleifspindel (5) befestigt ist.

9. Vorrichtung nach Anspruch 4, **dadurch gekennzeichnet, dass** der Werkstückhalter (3) oder Abricht-Werkzeughalter und/oder der Werkzeughalter (13) je auf einer linear verschiebbaren Einrichtung angeordnet sind.

10. Vorrichtung nach Anspruch 4, **dadurch gekennzeichnet, dass** der Wandler (11, 12) ein piezoelektrischer Aktuator ist.

11. Verwendung der Vorrichtung nach einem der Ansprüche 4 bis 10 in einer Transfermaschine für das Schleifen und/oder Hartfeinbearbeiten.

## Claims

1. Method for aligning a workpiece axis (9) or dressing tool axis in relation to a tool axis (10) of a tool on a machine tool, more particularly a circular grinding machine, **characterised in that** the position of at least one of the axes (9 or 10) is adjusted by means of a transducer (11, 12), the transducer being connected to an evaluating unit and being used both for measuring and for aligning.

2. Method according to claim 1, **characterised in that** the action of the transducer upon at least one axis is rotational, the workholder (3) or dressing tool holder being rotatable about an axis (4) and/or the tool holder (13) being rotatable about an axis (8) while the workpiece, the dressing tool, and the tool are fastened in their holders in determined positions.

3. Method according to claim 1 or 2, **characterised in that** the action of the transducer (11, 12) upon at least one axis is linearly translational, the workholder (3) or dressing tool holder being longitudinally displaceable and/or the tool holder (13) being longitudinally displaceable while the workpiece, the dressing tool, and the tool are fastened in their holders in determined positions.

4. Device for carrying out the method according to one of the preceding claims for aligning a workpiece axis (9) or dressing tool axis in relation to a tool axis (10) of a tool (7) on a machine tool, more particularly a circular grinding machine, **characterised in that** it comprises at least one transducer (11, 12) that is operationally connected to the workholder (3) or dressing tool holder and/or to the tool holder (13), and **in that** the transducer serves both for measuring and for aligning.

5. Device according to claim 4, **characterised in that** the workholder (3) or dressing tool holder is rotatably supported while the machine control is configured to take into account a potential distance between the centre of rotation and the workpiece.

6. Device according to claim 4, **characterised in that** the workholder (3) is fastened to a workpiece headstock (1) that is rotatable about an axis (4).

7. Device according to claim 4, **characterised in that** the tool holder (13) is rotatably supported while the machine control is configured to take into account a potential distance between the centre of rotation and the tool (7).

8. Device according to claim 7, **characterised in that** the workholder (13) is fastened to a grinding spindle (5) that is rotatable about an axis (8).

9. Device according to claim 4, **characterised in that** the workholder (3) or dressing tool holder and/or the tool holder (13) are disposed on respective linearly displaceable devices.

10. Device according to claim 4, **characterised in that** the transducer (11, 12) is a piezoelectric actuator.

11. Use of the device according to one of claims 4 to 10 in a transfer machine for grinding and/or hard finishing.

## Revendications

1. Procédé pour aligner l'axe (9) d'une pièce ou l'axe d'un outil de dressage par rapport à l'axe (10) d'un outil sur une machine-outil, plus particulièrement une rectifieuse cylindrique, **caractérisé en ce que** la position de l'un des axes (9 ou 10) au moins est ajustée à l'aide d'un transducteur (11, 12), le transducteur étant relié à une unité d'évaluation et étant utilisé tant pour la mesure que pour l'alignement.

2. Procédé selon la revendication 1, **caractérisé en ce que** l'action du transducteur sur au moins un axe est rotative, le porte-pièce (3) ou porte-outil de dressage pouvant tourner autour d'un axe (4) et/ou le porte-outil (13) pouvant tourner autour d'un axe (8) alors que la pièce, l'outil de dressage et l'outil sont retenus dans leurs dispositifs de fixation en positions déterminées.

3. Procédé selon la revendication 1 ou 2, **caractérisé en ce que** l'action du transducteur (11, 12) sur au moins un axe est linéairement translatoire, le porte-pièce (3) ou porte-outil de dressage étant longitudinalement déplaçable et/ou le porte-outil (13) étant longitudinalement déplaçable alors que la pièce, l'outil de dressage et l'outil sont retenus dans leurs dispositifs de fixation en positions déterminées.

4. Dispositif pour la mise en oeuvre du procédé selon l'une des revendications précédentes pour aligner de l'axe (9) d'une pièce ou d'un outil de dressage par rapport à l'axe (10) d'un outil (7) sur une machine-outil, plus particulièrement une rectifieuse cylindrique, **caractérisé en ce qu'**il comprend au moins un transducteur (11, 12) fonctionnellement relié au porte-pièce (3) ou porte-outil de dressage et/ou au porte-outil (13), et **en ce que** le transducteur sert en même temps à la mesure et à l'alignement.

5. Dispositif selon la revendication 4, **caractérisé en ce que** le porte-pièce (3) ou porte-outil de dressage est supporté de manière rotative, la commande de la machine étant adaptée à tenir compte d'une éventuelle distance entre le centre de rotation et la pièce.

6. Dispositif selon la revendication 4, **caractérisé en ce que** le porte-pièce (3) est fixé sur une poupée porte-pièce (1) rotative autour d'un axe (4).

7. Dispositif selon la revendication 4, **caractérisé en ce que** le porte-outil (13) est supporté de manière rotative, la commande de la machine étant adaptée à tenir compte d'une éventuelle distance entre le centre de rotation et l'outil (7).

8. Dispositif selon la revendication 7, **caractérisé en ce que** le porte-outil (13) est fixé sur une broche porte-meule (5) rotative autour d'un axe (8).

9. Dispositif selon la revendication 4, **caractérisé en ce que** le porte-pièce (3) ou porte-outil de dressage et/ou le porte-outil (13) sont chaque fois agencés sur un dispositif linéairement déplaçable.

10. Dispositif selon la revendication 4, **caractérisé en ce que** le transducteur (11, 12) est un actionneur piézoélectrique.

11. Utilisation du dispositif selon l'une des revendications 4 à 10 dans une machine transfert pour la rectification et/ou le finissage des matières dures.
